# EUROPÄISCHE PATENTSCHRIFT

(11) **EP 3 475 611 B1**
(45) Veröffentlichungstag und Bekanntmachung des Hinweises auf die Patenterteilung: **16.03.2022**
(21) Anmeldenummer: 17725550.2
(22) Anmeldetag: 11.05.2017
(51) Int. Cl.: F23L 15/04, F23C 3/00, F23C 7/06, F23C 6/04, F23D 14/66, F23D 14/22

(54) **BRENNER MIT OFFENEM STRAHLROHR**
BURNER WITH OPEN RADIANT TUBE
BRÛLEUR À TUBE RADIANT OUVERT

(30) Priorität: 24.06.2016 DE 102016111656
(43) Veröffentlichungstag der Anmeldung: 01.05.2019
(73) Patentinhaber: WS-Wärmeprozesstechnik GmbH, 71272 Renningen (DE)
(72) Erfinder: WÜNNING, Joachim G., 71229 Leonberg (DE); WÜNNING, Joachim A., 71229 Leonberg (DE)
(74) Vertreter: Rüger Abel Patentanwälte PartGmbB
(86) Internationale Anmeldenummer: PCT/EP2017/061373
(87) Internationale Veröffentlichungsnummer: WO 2017/220250

(56) Entgegenhaltungen:
- AT-B- 223 729
- DE-A1- 3 422 229
- GB-A- 1 072 700
- JP-U- S5 783 161
- US-A- 3 174 474
- US-A- 5 154 599
- US-A1- 2016 123 583

## Beschreibung

Die Erfindung betrifft einen Brenner, insbesondere Rekuperatorbrenner, für die gemischt direkte und indirekte Beheizung von Wärmegut in einem Ofen.

Für die Erwärmung von Halb- und Fertigerzeugnissen werden in der Industrie Öfen verwendet, die mit Brennern beheizt sind, bei denen die Abgaswärme zur Vorwärmung der dem Brenner zugeführten Luft teilweise zurückgewonnen wird.

Die DE 10 2010 0151 347 A1, die GB 1 072 700 sowie die US 3 174 474 beschreiben dazu einen Brenner, der mit einem als Strahlungsheizrohr dienenden Mantelrohr versehen ist. Innerhalb dieses Strahlungsheizrohrs wird Brennstoff oxidiert, um das Strahlungsheizrohr aufzuheizen, damit dieses Strahlungswärme abgibt.

Der Vorzug einer solchen Anordnung liegt darin, dass das Wärmegut nicht mit den Verbrennungsgasen in Berührung kommt, weswegen eine chemische Beeinflussung des Wärmeguts durch die Verbrennungsgase ausgeschlossen ist. Überdies eröffnet die indirekte Beheizung mittels Strahlungsheizrohr die Möglichkeit der Inertisierung des Ofenraums. Jedoch ist die Heizleistung durch den Wärmetransport durch die Strahlungsheizrohroberfläche begrenzt.

Es sind außerdem Industriebrenner zur direkten Beheizung von Ofenräumen bekannt. Dazu beschreibt die DE 34 22 229 C2 einen Brenner, der mit einer Einrichtung zur Abgaswärmerückgewinnung ausgerüstet ist und der eine Brennkammer aufweist, aus der Flammen und/oder heiße Abgase zur Beheizung des Ofenraums austreten können. Damit fällt eine Heizleistungsbegrenzung, wie sie bei Strahlungsheizrohren auftritt, weg. Allerdings muss die Einwirkung der Verbrennungsgase auf das Wärmegut in Kauf genommen werden. Beispielsweise kann bei der Erwärmung von Stahl auf höhere Temperaturen Zunder gebildet werden, was man typischerweise durch eine Verbrennung mit möglichst geringem Luftüberschuss einzugrenzen versucht. Hierbei kann es jedoch zur Erzeugung von Kohlenmonoxid kommen. Bei zu hohem Luftüberschuss kann es hingegen neben einer Verzunderung des Wärmeguts zu einer zu hohen Stickoxydbildung kommen. Sowohl Kohlenmonoxid als auch Stickoxid können nicht als Abgas in die Umgebung entlassen werden und erfordern daher aufwendige Maßnahmen zur Abgasnachwandlung.

Es ist Aufgabe der Erfindung, einen verbesserten Brenner zur Beheizung von Wärmegut in einem Ofen anzugeben. Weiter ist es Aufgabe der Erfindung, ein verbessertes Verfahren zur Beheizung von Wärmegut in einem Ofen anzugeben.

Der auf die Schaffung eines Brenners gerichtete Teil der Aufgabe wird durch einen Brenner nach Anspruch 1 gelöst:

Der erfindungsgemäße Brenner weist ein Strahlrohr auf, das an dem von dem Brenner weg weisenden Ende eine Öffnung aufweist, durch die hindurch Brennstoff und vorgewärmte Luft oder auch eine Flamme in den Ofenraum eingeleitet und durch die im Gegenstrom Abgas aus dem Ofenraum ausgeleitet wird. Das Strahlrohr begrenzt somit einen Abgaskanal, dem erfindungsgemäß eine Lufteinleitungseinrichtung zur Einleitung von Ausbrandluft zugeordnet ist. Damit wird es möglich, eine erste vorzugsweise unterstöchiometrische Stufe der Verbrennung außerhalb des Strahlrohrs im Ofenraum und eine zweite Stufe der Verbrennung im Strahlrohr stattfinden zu lassen. Dadurch kann der Ofenraum z.B. bei der Erwärmung von Metallen, wie Stahl, Kupfer, usw. durch die unterstöchiometrische Verbrennung mit einer nichtoxidativen Verbrennungsgasen gefüllt und eine zunderarme oder sogar zunderfreie Erwärmung erreicht werden (λ<1). Es wird eine CO-haltige Ofenatmosphäre erzeugt, die für das Wärmegut schützend wirken kann. Das CO-haltige Abgas wird dann mittels der durch die Lufteinleitungseinrichtung eingeleiteten Luft im Strahlrohr nachverbrannt. Die dabei frei werdende Wärme wird von dem Strahlrohr in den Ofen abgestrahlt.

Vorzugsweise werden die Luftmengen des Brenners und der Nachverbrennung so aufeinander abgestimmt, dass insgesamt eine stöchiometrische oder überstöchiometrische Verbrennung erreicht wird, λ liegt dabei vorzugsweise zwischen 1 und 1,2. z.B. werden dem Ofenraum 80% der benötigten Luftmenge zugeführt (im Ofenraum λ = 0,8), während dem Abgaskanal in dem Strahlrohr 20% bis 40% der benötigten Luftmenge zugeführt werden (λ = 1 ... 1,2). Vorzugsweise sind die Luftmenge und die Lufteinleiteinrichtung so abgestimmt, dass die Nachverbrennung in dem Wärme abstrahlenden, sich im Ofenraum befindenden Teil des Strahlungsheizrohrs vollendet ist und nicht in den Abschnitt herein reicht, in dem der Rekuperator angeordnet ist. Der Rekuperator ist dabei vorzugsweise auf den in der Ofenwand befindlichen, nicht zur Wärmeabstrahlung dienenden Teil des Strahlungsheizrohrs beschränkt.

Bei einer vorteilhaften Ausführungsform kann die Brennermündung an einem aus der Öffnung des Strahlrohrs herausragenden Teil des Brenners angeordnet sein. Damit ist es besonders einfach, eine großräumige Abgasrezirkulation zu erreichen, wodurch der Brenner mit flammenloser Oxidation betrieben werden kann. Dies kommt einem gleichmäßigem Wärmeeintrag in den Ofen und einer niedrigen Stickoxiderzeugung zugute.

Die Lufteinleitungseinrichtung ist durch an seiner Peripherie mit Luftlöchern versehenes Rohr gebildet, das sich durch das Strahlrohr erstreckt. Dieses Rohr bzw. dieser Rohrabschnitt kann aus Metall (z.B. Stahl oder Keramik) bestehen und nahtlos einstückig mit dem Rekuperator verbunden oder an diesen angesetzt. Insbesondere ist es möglich, den Rekuperator und den Rohrabschnitt der Lufteinleitungseinrichtung einteilig aus dem gleichen Material auszubilden. Der Rekuperator und die Lufteinleiteinrichtung sind vorzugsweise koaxial in dem Strahlrohr angeordnet.

Die Lufteinleitungseinrichtung und die Brennermündung können strömungsmäßig mit einem gemeinsamen Luftkanal verbunden sein, um von diesem mit vorgewärmter Luft gespeist zu werden. Dabei ist es möglich, auf eine Reguliervorrichtung zu verzichten, mit der die Größen der Luftströme (Brennerluft für den Brenner aus Ausbrandluft für die Lufteinleitungsvorrichtung) aufeinander abstimmbar sind. Die Abstimmung der Luftmengen aufeinander erfolgt vorzugsweise durch Bemessung der Querschnitte der Öffnungen der Lufteinleiteinrichtung für die Ausbrandluft auf die Größe der Austrittsöffnung(en) für die Brennerhauptluft.

Die Brennermündung umfasst mindestens eine Öffnung, die axial zu dem Brenner oder auch schräg oder auch radial zur Brennerachse orientiert ist. Damit können Brenner mit unterschiedlichsten Heizzonen unter Nutzung des erfindungsgemäßen Prinzips bereitgestellt werden, das auf teilweiser Verbrennung im Ofenraum und Nachverbrennung im Strahlrohr beruht.

Das erfindungsgemäße Verfahren beruht auf unterstöchiometrischem Betrieb eines Brenners und Ausleitung der so erzeugten reduzierenden Abgase durch ein Strahlrohr und Nachverbrennung der Abgase in diesem Strahlrohr, indem in den Abgaskanal des Strahlrohrs ergänzend Ausbrandluft eingeleitet wird. Damit wird in dem Abgaskanal eine Verbrennung unterhalten, die zur Beheizung des Strahlrohrs und zur zumindest weitgehenden Beseitigung von oxidierbaren Bestandteilen im Abgas genutzt wird. So ist ein sowohl NOx-armes wie auch, trotz unterstöchiometrischem Ofenbetrieb, ein CO-armes Abgas möglich, wobei die Wärmenutzung durch Wärmerekuperation gut und der Wärmeeintrag in den Ofen gleichmäßig ist.

Vorzugsweise wird der Ofenraum zu einem größeren Anteil direkt durch das von dem Brenner erzeugte heiße Gas und zu einem kleineren Anteil, der indirekt durch die von dem Strahlrohr abgegebene Wärme beheizt. Die Leistungsaufteilung beträgt z.B. 80%/20%.

Die Erfindung kann auch bei Regeneratorbrennern Anwendung finden.

Weitere Einzelheiten vorteilhafter Ausführungsformen der Erfindung sind Gegenstand der Ansprüche, der Beschreibung oder der Zeichnung. Es zeigen:
Figur 1 Ein Ofenraum mit einem erfindungsgemäßen Brenner, in schematisierter Schnittdarstellung,
Figur 2 eine abgewandelte Ausführungsform des erfindungsgemäßen Brenners, in schematisierter Schnittdarstellung,
Figur 3 eine weiter abgewandelte Ausführungsform des erfindungsgemäßen Brenners, in Längsschnittdarstellung und
Figur 4 eine Ausführungsform des erfindungsgemäßen Brenners mit radialem oder schrägem Flammenaustritt.

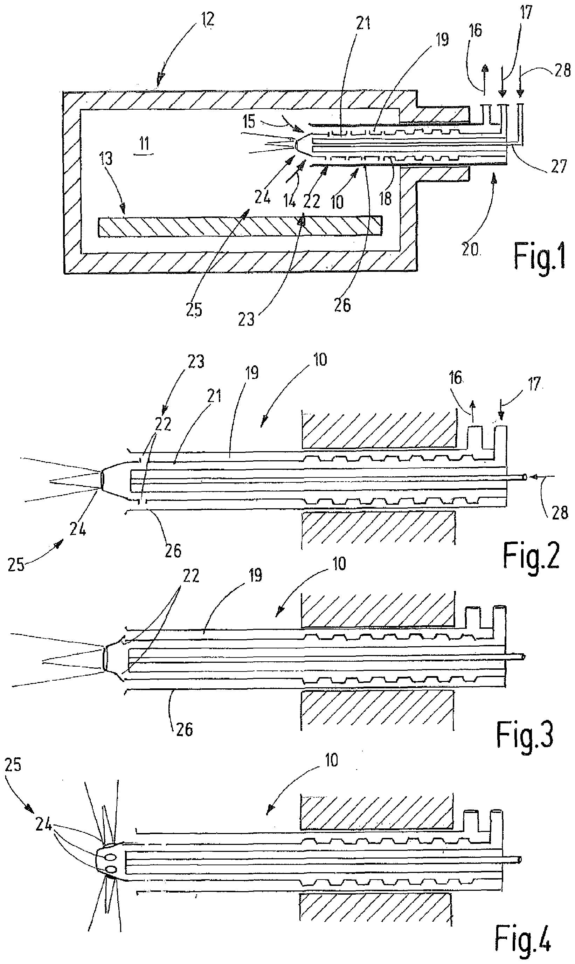

In Figur 1 ist ein Rekuperatorbrenner 10 veranschaulicht, der zur Beheizung des Innenraums 11 eines schematisch veranschaulichten Industrieofens 12 dient. Zur Beheizung desselben können mehrere Brenner mit Wärmerückgewinnung, z.B. Rekuperatorbrenner vorgesehen sein, die mit dem Rekuperatorbrenner 10, vorzugsweise baugleich, ausgebildet sind und die gemeinsam oder einzeln oder gruppenweise gesteuert werden.

Der Industrieofen dient der Wärmebehandlung eines Wärmeguts 13, das zum Beispiel durch Halb- oder Fertigfabrikate aus Metall oder anderen Werkstoffen gebildet sein kann. Zum Beispiel kann es sich um Stahlteile, Kupferteile oder dergleichen handeln. Die Ofentemperatur liegt typischerweise im Bereich mehrerer 100°C, und entspricht der gewünschten Anwendung. Liegt sie oberhalb einer kritischen Temperatur von typischerweise etwa 850°C kann der Brenner 10 im Betrieb mit flammenloser Oxidation betrieben werden. Liegt die Ofentemperatur unter dieser Grenze wird der Brenner 10 vorzugsweise in einer Betriebsart mit Flamme betrieben. Diese Betriebsart wird auch beim Aufheizen, insbesondere beim Kaltstart gewählt. Der Kaltstart kann mit stöchiometrischem Betrieb oder überstöchiometrisch erfolgen.

Der Brenner 10 ist vorzugsweise als sogenannter Rekuperatorbrenner ausgebildet, der dazu eingerichtet ist, einem durch Pfeile 14, 15, 16 angedeuteten Abgasstrom Wärme zu entziehen, um dadurch insbesondere einen durch einen Pfeil 17 angedeuteten Frischluftstrom Wärme zuzuführen. Dazu weist der Rekuperatorbrenner 10 einen Rekuperator 18 auf, der vorzugsweise als vorzugsweise profiliertes Rohr mit geschlossener Wandung ausgebildet ist und der mit seiner Außenseite einen Abgaskanal 19 begrenzt.

Der Rekuperator 18 kann zum Beispiel aus Metall oder, wie es bevorzugt wird, aus Keramik bestehen und an seiner Außenseite Strukturen zur Vergrößerung der Oberfläche und Verbesserung des Wärmeaustauschs mit dem Abgas aufweisen. Solche Strukturen können Vorsprünge und/oder Rücksprünge, Zacken, Noppen oder dergleichen sein. Der Rekuperator 18 erstreckt sich konzentrisch zur Längsmittelachse des Rekuperatorbrenners 10 und ist dabei vorzugswiese außerhalb des Ofenraums 11 in einem Brennerkopf 20 gehalten. Entsprechende Haltemittel sind aus der Praxis bekannt und in Figur 1 nicht weiter veranschaulicht.

An den eigentlichen Rekuperator 20 schließt sich ein Fortsatz 21 an, der vorzugsweise ebenfalls rohrförmig ausgebildet ist. Der Fortsatz 21 kann unmittelbar einstückiger Bestandteil des Rekuperators 18 sein und sich von diesem in axialer Verlängerung weg erstrecken. Auch dieser Fortsatz 21 kann zur Rekuperation (Wärmerückgewinnung) dienen. Vorzugsweise erstreckt sich der Rekuperator 18 durch die Ofenwand während der Fortsatz 21 vorzugsweise einen in den Ofenraum 11 hinein ragenden Teil bildet.

Der Fortsatz 21 weist eine der vorzugsweise mehrere Öffnungen 22 auf, die seine Wandung durchsetzen und von seinem Innenraum heraus in den Abgaskanal 19 führen. Diese Öffnungen 22 dienen als Lufteinleiteinrichtung 23 zur Einleitung von Ausbrandkluft in den Abgaskanal 19.

An seinem freien Ende ist der Fortsatz 21 mit mindestens einer Öffnung 24 versehen, die eine Brennermündung 25 bildet und konzentrisch zu der Brennerachse angeordnet ist. Sowohl die Öffnungen 22 als auch die Öffnung 24 werden mit Frischluft beaufschlagt, die an dem Brennerkopf 20, wie von dem Pfeil 17 angedeutet, in den Innenraum des Rekuperators 18 eingeleitet wird und an der Öffnung 24 als Brennerluft (Primärluft) und an den Öffnungen 22 als Ausbrandluft (Sekundärluft) austritt.

Der Rekuperator 18 und der Fortsatz 21 sind von einem Rohr 26 umgeben, das sich durch die Ofenwand erstreckt und in den Innenraum 11 ragt. Das Rohr 26 ist vorzugsweise konzentrisch zu dem Rekuperator 18 und dem Fortsatz 21 angeordnet und begrenzt den Abgaskanal 19 radial nach außen. Vorzugsweise durchragt der Fortsatz 21 das Rohr 26, so dass die Brennermündung 25 aus dem Rohr 26 herausschaut. Der in den Ofenraum 11 ragende Teil des Rohrs 26 dient als Strahlungsheizrohr. Es wird von dem im Abgaskanal 19 fließenden Abgas und der darin stattfindenden Nachverbrennung beheizt, die durch die von der Lufteinleiteinrichtung 23 zugeführte Ausbrandluft unterhalten wird. Vorzugsweise ist die Nachverbrennung in dem Abgasstrom abgeschlossen, bevor der Abgasstrom den Rekuperator 18 erreicht. Der Fortsatz 21 kann als Nebenfunktion zur Rekuperation beitragen. Dies verbessert die Energieausbeute des Brenners 10.

Zentral erstreckt sich durch den Rekuperator 18 und den Fortsatz 21 eine Brennstoffzufuhrleitung 27, deren offenes Ende auf die Brennermündung 25 gerichtet ist und durch diese hindurch Brennstoff in den Ofenraum 11 abgibt.

Der insoweit beschriebene Rekuperatorbrenner 10 arbeitet wie folgt:
Während des Betriebs wird flüssiger oder gasförmiger Brennstoff über die Brennstoffleitung 27 in den Brenner eingeleitet, wie der Pfeil 28 andeutet. Außerdem wird in den Rekuperator Luft eingeleitet (Pfeil 17) und es werden durch den Abgaskanal 19 Abgase abgesaugt (Pfeile 14, 15, 16). Im stationären Betrieb beheizt das durch den Abgaskanal 19 abströmende Abgas den Fortsatz 21 und den Rekuperator 18, der seinerseits die zuströmende Luft erhitzt. An der Brennermündung 25 tritt ein Strom bestehend aus vorgeheizter Luft und Brennstoff aus, der je nach Betriebsführung entweder mit Flamme verbrennt oder aufgrund einer großräumigen Abgasrezirkulation und eines ausreichenden Impulses der Frischluft und des Brennstoffs in dem aufgeheizten Ofenraum flammenlos oxidiert. Der Brenner 10 kann somit bedarfsentsprechend entweder zur Flammenlosen Oxidation oder zum Flammenbetrieb eingerichtet sein.

Die zugeführte Brennstoffmenge und die durch die Öffnung 24 ausströmende Primär-Luftmenge sind so aufeinander abgestimmt, dass sich in dem Ofenraum 11 eine unterstöchiometrische Verbrennung ergibt. Zum Beispiel werden an der Öffnung 24 nur 70% bis 90%, vorzugsweise nur 80% der für eine vollständige Verbrennung benötigten Luft abgegeben, wodurch sich eine reduzierende Ofenatmosphäre ergibt (λ = 0,8). In dieser Ofenatmosphäre können Brennstoffreste, teilverbrannter Brennstoff und insbesondere auch Kohlenmonoxid vorhanden sein. Dieses Abgas tritt, wie die Pfeile 14, 15 andeuten, in den Abgaskanal 19 ein. Über die Öffnungen 22 werden nun die restlichen 20% der für die vollständige Verbrennung benötigten Luft als Ausbrandluft in den Abgaskanal 19 gegeben. Die hier stattfindende Nachverbrennung beheizt den betreffenden Teil des Rohrs 26 und strömt dann dem Rekuperator 18 zu.

Die Aufteilung der Luft auf die Brennermündung 25 und die Lufteinleiteinrichtung 23 wird vorzugsweise durch das Verhältnis der Querschnitte der Öffnungen 24, 22 zueinander bestimmt. Damit kann die Lufteinteilung mit der Herstellung des Rekuperatorbrenners 10 fest vorgegeben werden. Der Rekuperatorbrenner 10 wird vorzugsweise im Impulsbetrieb oder im Dauerbetrieb befeuert. Modulierender Betrieb ist möglich, jedoch für die meisten Anwendungsfälle nicht erforderlich. Durch den Impulsbetrieb kennt der Rekuperatorbrenner 10 letztlich lediglich drei Betriebszustände nämlich a) Aufheizen, b) aufgeheizter Betrieb und c) Betriebspause. Bei aufgeheiztem Betreib wird der Rekuperatorbrenner 10 mit vorgegebener Brennstoff- und Luftzufuhr und Abgasabfuhr betrieben. Damit ist sichergestellt, dass das Verhältnis zwischen Brennerluft und Ausbrandluft wie vorgegeben eingehalten wird.

Bei modulierendem Betrieb ist es möglich, dass sich aufgrund unterschiedlicher nichtlinearer Strömungswiderstände der Öffnungen 22 und 24 das Verhältnis zwischen Brennerluft (Primärluft) und Ausbrandluft (Sekundärluft) bei Teillast gegenüber Volllast verschiebt. Dieser Effekt kann auch in Kombination mit Impulsbetrieb bewusst zur Steuerung der Zusammensetzung der Ofenatmosphäre genutzt werden.

Der in Figur 1 veranschauliche Rekuperatorbrenner 10 beheizt das Wärmegut 13 teilweise direkt durch Flamme oder flammenlose Oxidation und teilweise indirekt durch Wärmestrahlung von dem Rohr 26. Er verbindet hohe Brennstoffausnutzung durch hohe Wärmerückgewinnung mit schonender Erwärmung des Wärmeguts 13 durch Vermeidung lokaler Wärmespitzen und Vermeidung von oxidativer Belastung des Wärmeguts mit guten Abgaswerten.

Figur 2 veranschaulicht eine abgewandelte Ausführungsform eines Rekuperatorbrenners 10, für den die vorstehende Beschreibung unter Zugrundlegung gleicher Bezugszeichen entsprechend gilt. Jedoch beschränkt sich im Gegensatz zu dem vorstehend beschriebenen Rekuperatorbrenner 10 die Lufteinleiteinrichtung 23 auf wenige Öffnungen 22, die in der Nähe des vorderen Endes des Fortsatzes 21 angebracht sind. Damit wird die Lufteinleitung in den Abgaskanal 19 auf den abgaseintrittsnahen Teil des (Strahlungsheiz)-Rohrs 26 beschränkt. Die Öffnungen 22 können dabei radial gerichtet sein, wie es Figur 1 und 2 andeuten. Die Größe der Öffnungen 22 kann für alle Öffnungen 22 gleich bemessen sein. Alternativ kann die Größe der Öffnungen 22 bei der Ausführungsform nach Figur 1 auch in Axialrichtung des Fortsatzes 21 variieren. Zum Beispiel kann sie von der Brennermündung 25 weg zunehmen oder abnehmen.

Wie Figur 3 zeigt, können die Öffnungen 22 für die Ausbrandluft auch etwa auf Höhe des Endes des Strahlrohrs 26 angeordnet sein und dem austretenden Ausbrandluftstrom neben einer Radialkomponente auch eine axiale Komponente geben. In dem Abgaskanal 19 ist bei allen Ausführungsformen sowohl flammenbehaftet als auch flammenlose Oxidation möglich.

Die Brennermündung 25 kann wie Figur 4 zeigt, auch mehrere Austrittsöffnungen 24 umfassen, was insbesondere von Bedeutung sein kann, wenn deren Austrittsrichtung radial oder schräg zur Axialen des Rekuperatorbrenners 10 gerichtet ist. Ein solcher Rekuperatorbrenner 10 kann immer einen Ofenraum 12 nach Figur 1 zum Beispiel an der Ofenraumoberseite hängend angeordnet sein und dennoch ein Auftreffen des Brennstoffstroms auf das Wärmegut 13 vermeiden.

Erfindungsgemäß wird ein Rekuperatorbrenner 10 vorgesehen, der einen Ofenraum 11 unterstöchiometrisch befeuert. Der Rekuperatorbrenner ist in einem zum Ofenraum hin offenen Strahlrohr 26 angeordnet, das in den Ofenraum ragt. Das Strahlrohr 26 bildet mit dem Rekuperator 18 bzw. einem Fortsatz 21 einen Abgaskanal 19, in den mittels einer Lufteinleiteinrichtung 23 Ausbrandluft eingeleitet wird. Die somit in dem Abgaskanal 19 auftretende Nachverbrennung beheizt das Strahlrohr 26. Der Ofenraum 11 wird teilweise direkt durch Brennstoff und Luft und teilweise indirekt durch das Strahlrohr 26 beheizt. Durch die Nachverbrennung in dem Abgaskanal 19 wird eine zu hohe CO-Emission vermieden. Durch die Nutzung der hier entstehenden Wärme durch das Strahlrohr 26 werden andererseits zu hohe Abgastemperaturen vermieden und die thermische Ausnutzung des Brennstoffs optimiert.

**Bezugszeichen**

| | |
|---|---|
| 10 | Brenner/Rekuperatorbrenner |
| 11 | Innenraum |
| 12 | Industrieofen |
| 13 | Wärmegut (z.B. Stahlteile, Kupferteile, anderweitige Metallteile oder Teile aus nichtmetallischem Material) |
| 14 - 16 | Pfeile für Abgas |
| 17 | Pfeile für Frischgas |
| 18 | Rekuperator |
| 19 | Abgaskanal |
| 20 | Brennerkopf |
| 21 | Fortsatz |
| 22 | Öffnung (en) |
| 23 | Lufteinleiteinrichtung |
| 24 | Öffnung |
| 25 | Brennermündung |
| 26 | Rohr (Strahlungsheizrohr) |
| 27 | Brennstoffleitung |
| 28 | Pfeil |
| | |
| | |
| | |
| | |
| | |
| | |
| | |
| | |

## Patentansprüche

1. Brenner (10) zur Beheizung eines Ofens (12) mittels aus einer Brennermündung (25) austretender vorgewärmter Luft und Brennstoff,
mit einem Rekuperator (18) und mit einem Abgaskanal, wobei
der Rekuperator (18) zur Luftvorwärmung mittels Abgaswärme in oder an dem Abgaskanal (19) angeordnet ist, mit einem Strahlungsheizrohr (26), das an einem von dem Brenner (10) weg weisenden Ende eine Öffnung (24) aufweist und das an dem Brenner (10) angeordnet ist, um den Abgaskanal (19) peripher zu begrenzen,
mit einer Lufteinleitungseinrichtung (23) zur Einleitung von Luft in den Abgaskanal (19), wobei die Lufteinleitungseinrichtung (23) durch ein an seiner Peripherie mit Luftlöchern (22) versehenes Rohr gebildet ist, das sich durch
das Strahlrohr erstreckt und nahtlos einstückig mit dem Rekuperator verbunden oder an diesen angesetzt ist.

2. Brenner nach Anspruch 1, **dadurch gekennzeichnet, dass** die Brennermündung (25) an einem aus der Öffnung des Strahlungsheizrohrs (26) herausragenden Teil des Brenners (10) angeordnet ist.

3. Brenner nach einem der vorstehenden Ansprüche, **dadurch kennzeichnet, dass** die Lufteinleitungseinrichtung (23) und die Brennermündung (25) strömungsmäßig mit einem gemeinsamen Luftkanal verbunden sind, um von diesem mit Luft gespeist zu werden.

4. Brenner nach einem der vorstehenden Ansprüche, **dadurch gekennzeichnet, dass** die Brennermündung (25) und die Lufteinleitungseinrichtung (23) so aufeinander und auf den Brennstoffstrom abgestimmt sind, dass der von der Brennermündung (25) abgegebene Luftstrom zu einer unterstöchiometrischen Verbrennung führt.

5. Brenner nach Anspruch 1, **dadurch gekennzeichnet, dass** die Summe aus von der Brennermündung (25) abgegebenen Luftstrom und von der Lufteinleitungseinrichtung (23) abgegebenem Luftstrom zu dem Brennstoffstrom im stöchiometrischen oder überstöchiometrischen Verhältnis steht.

6. Brenner nach einem der vorstehenden Ansprüche, **dadurch gekennzeichnet, dass** die Brennermündung (25) axial zu dem Brenner (10) und dem Strahlungsheizrohr (26) orientiert ist.

7. Brenner nach einem der vorstehenden Ansprüche, **dadurch gekennzeichnet, dass** die Brennermündung (25) mindestens eine Öffnung (24) umfasst, die schräg oder radial zu der Brennerachse steht.

8. Brenner nach einem der vorstehenden Ansprüche, **dadurch gekennzeichnet, dass** die Heizleistung des Strahlungsheizrohrs (26) auf einen Wert zwischen 10% und 30%, vorzugsweise auf 20% der Gesamtheizleistung des Brenners (10) festgelegt ist.

9. Brenner nach einem der vorstehenden Ansprüche, **dadurch gekennzeichnet, dass** der Brenner zur Herbeiführung und Aufrechterhaltung eines flammenlosen Oxidationsprozesses in dem Ofenraum (11) ausgelegt ist.

10. Verfahren zur Beheizung einen Ofenraums mit einem Brenner gemäß Anspruch 1, wobei dieser ein Strahlungsheizrohr (26) aufweist, das einen Abgaskanal (19) umgibt und an seinem freien Ende offen ist, wobei der Brenner unterstöchiometrisch betrieben und ergänzend in den Abgaskanal Ausbrandluft eingeleitet wird.

11. Verfahren nach Anspruch 10, **dadurch gekennzeichnet, dass**
mittels der Ausbrandluft in dem Abgaskanal eine Verbrennung unterhalten wird, die zur Beheizung des Strahlungsheizrohrs (26) genutzt wird.

12. Verfahren nach Anspruch 10 oder 11, **dadurch gekennzeichnet, dass** der Ofenraum zu einem größeren Teil direkt durch das von dem Brenner (10) erzeugte heiße Gas und zu einem kleineren Teil indirekt durch die von dem Strahlungsheizrohr (26) abgegebene Wärme beheizt wird.

## Claims

1. Burner (10) for heating a furnace (12) by means of pre-heated air and fuel emerging from a burner mouth (25),
with a recuperator (18) and an exhaust gas channel, wherein the recuperator (18) is arranged in or on the exhaust gas channel (19) for preheating air by means of exhaust gas heat,
with a radiant heat tube (26) which has an opening (24) at an end pointing away from the burner (10) and which is arranged on the burner (10) so as to peripherally delimit the exhaust gas channel (19),
with an air introduction device (23) for introducing air into the exhaust gas channel (19), wherein the air introduction device (23) is formed by a pipe which is provided with air holes (22) on its periphery and which extends through the radiant tube and is connected or attached seamlessly and integrally to the recuperator.

2. Burner according to claim 1, **characterised in that** the burner mouth (25) is arranged on a part of the burner (10) which protrudes from the opening of the radiant heat tube (26).

3. Burner according to any of the preceding claims, **characterised in that** the air introduction device (23) and the burner mouth (25) are fluidically connected to a common air channel so as to be supplied with air thereby.

4. Burner according to any of the preceding claims, **characterised in that** the burner mouth (25) and the air introduction device (23) are matched to one another and to the fuel flow such that the air flow emitted from the burner mouth (25) leads to a substoichiometric combustion.

5. Burner according to claim 1, **characterised in that** the sum of the air flow emitted from the burner mouth (25) and the air flow emitted from the air introduction device (23) stands in a stoichiometric or super-stoichiometric ratio to the fuel flow.

6. Burner according to any of the preceding claims, **characterised in that** the burner mouth (25) is oriented axially to the burner (10) and to the radiant heat tube (26).

7. Burner according to any of the preceding claims, **characterised in that** the burner mouth (25) comprises at least one opening (24) which stands obliquely or radially to the burner axis.

8. Burner according to any of the preceding claims, **characterised in that** the heating power of the radiant heat tube (26) is established at a value between 10% and 30%, preferably 20% of the total heating power of the burner (10).

9. Burner according to any of the preceding claims, **characterised in that** the burner is configured to provoke and maintain a flameless oxidation process in the furnace chamber (11).

10. Method for heating a furnace chamber with a burner according to claim 1, wherein the latter has a radiant heat tube (26) which surrounds an exhaust gas channel (19) and is open at its free end, wherein the burner is operated substoichiometrically and complementarily to the burn-out air introduced into the exhaust gas channel.

11. Method according to claim 10, **characterised in that** by means of the burn-out air in the exhaust gas channel, a combustion is maintained which is used for heating the radiant heat tube (26).

12. Method according to claim 10 or 11, **characterised in that** the furnace chamber is heated to a greater part directly by the hot gas generated by the burner (10) and to a smaller part indirectly by the heat emitted from the radiant heat tube (26).

## Revendications

1. Brûleur (10) destiné au chauffage d'un four (12) au moyen d'air préchauffé, sortant d'une bouche de brûleur (25), et de combustible,
comprenant un récupérateur (18) et un conduit de gaz brûlés,
le récupérateur (18) étant disposé dans ou sur le conduit de gaz brûlés (19) en vue du préchauffage de l'air à l'aide de la chaleur des gaz brûlés, comprenant un tube chauffant radiant (26) qui présente une ouverture (24) à une extrémité détournée du brûleur (10) et qui est disposé sur le brûleur (10) pour délimiter le conduit de gaz brûlés (19) sur sa périphérie,
comprenant un dispositif d'introduction d'air (23) destiné à introduire de l'air dans le conduit de gaz brûlés (19), le dispositif d'introduction d'air (23) étant constitué d'un tube qui est doté d'orifices d'air (22) sur sa périphérie et qui s'étend à travers le tube radiant et est relié d'une seule pièce, sans soudure, au récupérateur ou est rapporté sur celui-ci.

2. Brûleur selon la revendication 1, **caractérisé en ce que** la bouche de brûleur (25) est disposée sur une partie du brûleur (10) qui dépasse de l'ouverture du tube chauffant radiant (26).

3. Brûleur selon l'une des revendications précédentes, **caractérisé en ce que** le dispositif d'introduction d'air (23) et la bouche de brûleur (25) sont reliés du point de vue de l'écoulement à un conduit d'air commun afin d'être alimentés en air par celui-ci.

4. Brûleur selon l'une des revendications précédentes, **caractérisé en ce que** la bouche de brûleur (25) et le dispositif d'introduction d'air (23) sont adaptés l'un à l'autre et au flux de combustible de manière à ce que le flux d'air délivré par la bouche de brûleur (25) provoque une combustion sous-stœchiométrique.

5. Brûleur selon la revendication 1, **caractérisé en ce que** la somme du flux d'air délivré par la bouche de brûleur (25) et du flux d'air délivré par le dispositif d'introduction d'air (23) présente un rapport stœchiométrique ou sur-stœchiométrique avec le flux de combustible.

6. Brûleur selon l'une des revendications précédentes, **caractérisé en ce que** la bouche de brûleur (25) est orientée dans le sens axial par rapport au brûleur (10) et au tube chauffant radiant (26).

7. Brûleur selon l'une des revendications précédentes, **caractérisé en ce que** la bouche de brûleur (25) comporte au moins une ouverture (24) qui est disposée en biais ou radialement par rapport à l'axe du brûleur.

8. Brûleur selon l'une des revendications précédentes, **caractérisé en ce que** la puissance calorifique du tube chauffant radiant (26) est fixée à une valeur comprise entre 10 % et 30 %, de préférence à 20 % de la puissance calorifique totale du brûleur (10).

9. Brûleur selon l'une des revendications précédentes, **caractérisé en ce que** le brûleur est conçu pour la mise en place et le maintien d'un processus d'oxydation sans flamme dans l'enceinte du four (11).

10. Procédé de chauffage d'une enceinte de four avec un brûleur selon la revendication 1, selon lequel ce dernier présente un tube chauffant radiant (26) qui entoure un conduit de gaz brûlés (19) et est ouvert à son extrémité libre, le brûleur ayant un fonctionnement sous-stœchiométrique, et de l'air de combustion complète étant introduit en complément dans le conduit de gaz brûlés.

11. Procédé selon la revendication 10, **caractérisé en ce que** l'air de combustion complète sert à entretenir dans le conduit de gaz brûlés une combustion qui est utilisée pour chauffer le tube chauffant radiant (26).

12. Procédé selon la revendication 10 ou 11, **caractérisé en ce que** l'enceinte du four est chauffée en majeure partie directement par le gaz chaud produit par le brûleur (10) et dans une moindre mesure de manière indirecte par la chaleur dégagée par le tube chauffant radiant (26).
